(19) Europäisches Patentamt / European Patent Office / Office européen des brevets

(11) **EP 1 438 177 B1**

(12) **EUROPÄISCHE PATENTSCHRIFT**

(45) Veröffentlichungstag und Bekanntmachung des Hinweises auf die Patenterteilung:
**31.01.2007 Patentblatt 2007/05**

(21) Anmeldenummer: **02781239.5**

(22) Anmeldetag: **11.10.2002**

(51) Int Cl.:
**B29C 53/08** (2006.01)     **A22C 13/00** (2006.01)

(86) Internationale Anmeldenummer:
**PCT/EP2002/011400**

(87) Internationale Veröffentlichungsnummer:
**WO 2003/033244 (24.04.2003 Gazette 2003/17)**

(54) **KRANZFÖRMIG GEBOGENE, SCHLAUCHFÖRMIGE NAHRUNGSMITTELHÜLLE AUF POLYAMIDBASIS**

TUBULAR ENVELOPE FOR FOOD PRODUCT, BASED ON POLYAMIDE AND BENT INTO THE SHAPE OF A RING

ENVELOPPE DE PRODUIT ALIMENTAIRE TUBULAIRE A BASE DE POLYAMIDE, RECOURBEE EN COURONNE

(84) Benannte Vertragsstaaten:
**DE**

(30) Priorität: **17.10.2001 DE 10150573**

(43) Veröffentlichungstag der Anmeldung:
**21.07.2004 Patentblatt 2004/30**

(73) Patentinhaber: **Kalle GmbH**
**65203 Wiesbaden (DE)**

(72) Erfinder:
• **AUF DER HEIDE, Christian**
**49080 Osnabrück (DE)**
• **AUF DER HEIDE, Dirk**
**49594 Alfhausen (DE)**
• **KALLWEIT, Jürg-Heinrich**
**49076 Osnabrück (DE)**

(74) Vertreter: **Plate, Jürgen et al**
**Zounek Plate Schweitzer**
**Patentanwaltskanzlei**
**Rheingaustrasse 196**
**65203 Wiesbaden (DE)**

(56) Entgegenhaltungen:
EP-A- 1 084 962          DE-A- 19 607 340
DE-A- 19 833 986          GB-A- 1 490 913
US-A- 4 022 860

**Beschreibung**

Die Erfindung betrifft eine kranzförmig gebogene, ein- oder mehrschichtige, schlauchförmige Nahrungsmittelhülle auf der Basis von Polyamid. Sie betrifft daneben ein Verfahren zur Herstellung der Schlauchfolie.

Kranzförmig gebogene, schlauchförmige Nahrungsmittelhüllen sind bereits bekannt (s. G. Effenberger, *Wursthüllen - Kunstdarm,* 2. Aufl. [1991], Holzmann Buchverlag, Bad Wörishofen). Diese sogenannten "Kranzdärme" lassen sich aus Naturdarm (insbesondere vom Rind, Schwein oder Schaf), aus Hautfaserdarm (= Kollagendarm), aus Cellulosedarm oder aus verstreckten ein- oder mehrschichtigen Hüllen aus synthetischen Polymeren, wie Polyamid oder Polyolefin, herstellen. Die Hüllen zeigen verschiedene Vor- und Nachteile.

Der Naturdarm besitzt bereits die gewünschte gebogene Form und ist zudem besonders gut räucherbar. Seine Gewinnung und Verarbeitung ist jedoch aufwendig und eine gleichmäßige Qualität ist nicht gewährleistet. Beim Füllen mit Wurstbrät platzt die Hülle relativ leicht. Weiterhin zeigt der Naturdarm nur eine geringe Barrierewirkung für Luftsauerstoff und Wasserdampf. Wurstwaren im Naturdarm trocknen daher nach kurzer Zeit aus. Empfindliche Brätsorten verfärben sich unter dem Einfluß von Sauerstoff relativ schnell.

Eine gleichmäßigere Qualität bietet der Kollagendarm. Er läßt sich zudem in industriellem Maßstab kostengünstiger herstellen. Auch die Kollagendärme zeigen eine natürlich wirkende Optik und sind gut räucherbar. Gefüllte Abschnitte des Kollagendarms lassen sich, wie beim Naturdarm, durch Abdrehen verschließen. Die Hülle ist heiß anschneidbar ohne aufzuplatzen. Kollagendärme werden aus dem Material des sogenannten Hautspalts hergestellt, der von der Innenseite der frischen Rinderhaut abgetrennt wird. Das Auftreten von Rinderseuchen, wie Maul- und Klauenseuche sowie BSE, hat zu entsprechenden Vorbehalten gegenüber diesem Material geführt. In einer Zweitverpackung befindliche Wurstwaren im Kollagendarm bekommen nach etwa einwöchiger Lagerung durch das sogenannte "Ausdippen" ein unansehnliches Aussehen.

Cellulosedarm läßt sich in gleichmäßiger Qualität kostengünstig herstellen, doch ist seine Wasserdampfbarriere gering, so daß das darin befindliche Wurstbrät leicht austrocknet.

Kranzdärme aus orientiertem Polyamid (OPA) sind besonders prozeßaufwendig in der Herstellung. So ist in der DE-C 27 10 257 ein Kranzdarm offenbart, der aus einer geraden OPA-Schlauchfolie hergestellt wird. Gerade Schläuche werden in aufgeblasenem Zustand in heißem Wasser erhitzt und mit Hilfe einer gebogenen Haltevorrichtung heißverformt. Dabei wird ein Schrumpf ausgelöst, der die entsprechende Krümmung der Schlauchfolie bewirkt.

Durch eine Mattierung kann der Oberfläche ein natürliches Aussehen verliehen werden. Die Durchlässigkeit für Wasserdampf und Sauerstoff ist allgemein gering. OPA-Kranzdärme sind demgemäß in der Regel nicht rauchdurchlässig, d.h. nicht räucherbar. Sie sind auch nicht durch Abdrehen verschließbar. Ein weiterer Nachteil dieser Hüllen ist, daß sie sich vom Wustbrät nicht durch Abringeln entfernen lassen und daß sie sehr leicht in Längsrichtung aufplatzen, wenn die Wurst im heißen Zustand angeschnitten wird.

Letzteres gilt auch für den bogenförmig gekrümmten Kunstdarm gemäß der US-A 4 022 860, bei dessen Herstellung ein nicht-verstreckter Folienschlauch aus dem Polymermaterial um einen zylindrischen Formkörper herumgeführt wird, ohne daß dabei eine Hitzebehandlung stattfindet. Bei Kontakt mit heißem Wasser oder Dampf schrumpft dieser Kunstdarm erheblich.

Es bestand die Aufgabe, einen Kranzdarm zu schaffen, der die Vorteile der bekannten Därme in sich vereinigt, ohne zugleich deren Nachteile aufzuweisen, d.h. er soll einfach und kostengünstig herstellbar sein, eine gleichmäßige Qualität aufweisen, eine an das Wurstbrät anpaßbare hohe Wasserdampf- und Sauerstoffbarriere bieten, durch Abdrehen verschließbar sein, sich heiß anschneiden lassen, ohne dabei aufzureißen, abringelbar und gegebenenfalls auch räucherbar sein. Ein Nahrungsmittelprodukt in dem Kranzdarm soll sich mit einer Zweitverpackung versehen und darin lagern lassen, ohne daß sich Flüssigkeit zwischen dem Kranzdarm und der Zweitverpackung ansammelt ("Ausdippen").

Überraschenderweise wurde gefunden, daß sich diese Aufgabe lösen läßt mit dem Verkranzen eines unverstreckten Polyamid-Kunstdarms (UPA). Bisher bestand die Vorstellung, daß sich nur verstreckte und damit schrumpffähige Polyamid-Hüllen (OPA-Hüllen) in Kranzform bringen lassen.

Gegenstand der vorliegenden Anmeldung ist ein bogenförmig gekrümmter, ein- oder mehrschichtiger Kunstdarm auf der Basis von Polyamid, der dadurch gekennzeichnet ist, daß er unverstreckt ist und nach 15 Minuten Erwärmen in einem 80 °C Wasserbad einen Schrumpf von weniger als 4 % in Längs- und Querrichtung zeigt. Dieser sogenannte Kranzdarm ist allgemein nahtlos.

Der erfindungsgemäße Kranzdarm ist durch Abdrehen verschließbar. Später kann er durch Abringeln vom Wurstbrät entfernt werden. Anders als ein OPA-Darm läßt er sich heiß anschneiden, ohne einzureißen. Während des Brühvorgangs kann die Kemtemperatur des Wurstbräts daher auch mit Hilfe eines Stichthermometers bestimmt werden, ohne daß dabei die Hülle aufreißt. Bei einer OPA-Hülle wäre das nicht möglich.

Die erfindungsgemäße Nahrungsmittelhülle besteht allgemein zu mehr als 50 Gew.-% aus mindestens einem Polyamid und/oder Copolyamid, vorzugsweise aliphatischem Polyamid, wie PA 6, PA 66, PA 6/66, PA 6,12. Das aliphatische Polyamid ist in der Regel ein Homopolykondensat aus aliphatischen primären Diaminen und aliphatischen Dicarbonsäuren oder ein Homopolymerisat von ω-Aminocarbonsäuren oder deren Lactamen. Das aliphatische Copolyamid enthält die gleichen Einheiten und ist z. B. ein Polymer auf der Basis von einem oder mehreren aliphatischen Diaminen und einer oder mehreren aliphatischen Dicarbonsäuren und/oder einer oder verschiedenen ω- Aminocarbonsäuren bzw. deren Lactamen. Die aliphatischen primären Diamine enthalten insbesondere 4 bis 8 C-Atome. Geeignete Diamine sind Tetra-, Penta-, Hexa- und Octamethylendiamin, besonders bevorzugt ist Hexamethylendiamin. Die aliphatischen Dicarbonsäuren enthalten insbesondere 4 bis 12 C-Atome. Beispiele für geeignete Dicarbonsäuren sind Adipinsäure, Azelainsäure, Sebazinsäure und Dodecandicarbonsäure. Die ω-Aminocarbonsäuren bzw. deren Lactame enthalten 6 bis 12 C-Atome. Beispiele dafür sind 11-Aminoundecansäure bzw. ε-Caprolactam und ω-Laurinlactam. Ein besonders bevorzugtes aliphatisches Copolyamid ist PA 6/66, das aus Caprolactam-, Hexamethylendiamin- und Adipinsäureeinheiten besteht.

Daneben kann auch teilaromatisches Polyamid enthalten sein. Bei den teilaromatischen Polyamiden oder Copolyamiden können entweder die Diamineinheiten überwiegend oder ausschließlich die aromatischen Einheiten bilden, während die Dicarbonsäureeinheiten überwiegend oder ausschließlich aliphatischer Natur sind, oder die Diamineinheiten sind überwiegend oder ausschließlich aliphatischer Natur, während die Dicarbonsäureeinheiten überwiegend oder ausschließlich die aromatischen Einheiten bilden. Beispiele für die erste Ausführungsform sind teilaromatische Polyamide und Copolyamide, bei denen die aromatischen Diamineinheiten aus Xylylendiamin und Phenylendiamin bestehen. Die aliphatischen Dicarbonsäuren dieser Ausführungsform enthalten im allgemeinen 4 bis 10 C-Atome, wie die Adipin-, Sebazin- und Azelainsäure. Neben den aromatischen Diamineinheiten und den aliphatischen Dicarbonsäureeinheiten können auch noch aliphatische Diamineinheiten und aromatische Dicarbonsäureeinheiten in Mengen von jeweils bis zu 5 mol-% enthalten sein. Eine besonders bevorzugte Ausführungsform besteht aus m-Xylylendiamin- und Adipinsäureeinheiten (PA MXD6). Beispiele für die zweite Ausführungsform sind teilaromatische Polyamide und Copolyamide, bei denen die aliphatischen Diamine im allgemeinen 4 bis 8 C-Atome besitzen. Unter den aromatischen Dicarbonsäuren sind insbesondere Isophthalsäure und Terephthalsäure hervorzuheben. Neben den aliphatischen Diamineinheiten und den aromatischen Dicarbonsäureeinheiten können auch noch aromatische Diamineinheiten und aliphatische Dicarbonsäureeinheiten in Mengen von jeweils bis zu 5 mol-% enthalten sein. Eine besonders bevorzugte Ausführungsform besteht aus Hexamethylendiamin, Isophthalsäure und Terephthalsäure (PA 6I/6T).

Mischungen von aliphatischen und teilaromatischen Polyamiden bzw. Copolyamiden sind besonders bevorzugt.

Der Anteil des teilaromatischen Polyamids beträgt dabei bevorzugt bis zu 40 Gew.-%, besonders bevorzugt bis zu 30 Gew.-%, jeweils bezogen auf das Gesamtgewicht aller Polyamide und/oder Copolyamide. Die Polyamid und/ oder Copolyamid enthaltenden Schichten können auch andere Polymere enthalten, beispielsweise Polyolefine (insbesondere Polyethylen, Polypropylen, Ethylen/Propylen-Copolymere, Copolymere mit Einheiten aus Ethylen, Propylen und/oder geradkettigen α-Olefinen mit 4 bis 10 Kohlenstoffatomen) oder Polyester.

Der Anteil der anderen Polymere beträgt allgemein bis zu 50 Gew.-%, bevorzugt bis zu 35 Gew.-%, besonders bevorzugt bis zu 30 Gew.-%, bezogen jeweils auf das Gesamtgewicht der Schicht.

Die einschichtige Hülle bzw. die äußere Schicht der mehrschichtigen Hülle gemäß der Erfindung enthält in einer bevorzugten Ausführungsform Mattierungsmittel, die der Oberfläche ein Aussehen ähnlich dem eines Naturdarms geben. Geeignete Mattierungsmittel sind dem Fachmann allgemein bekannt und nicht Gegenstand der vorliegenden Erfindung.

Die mehrschichtigen erfindungsgemäßen Kranzdärme umfassen vorzugsweise 2 bis 6 Schichten. Mindestens eine davon ist eine Schicht auf der Basis von Polyamid. Vorzugsweise trifft das sogar auf mindestens zwei Schichten zu. Die weiteren Schichten sind beispielsweise Schichten aus bzw. mit Polyolefin, Polyvinylalkohol (PVOH), Polyvinylacetat (PVA), Polyvinylidenchlorid (PVDC) oder Polyvinylchlorid (PVC) hergestellt. Die Polyolefine entsprechen dabei vorzugsweise der obigen Definition.

Um eine ausreichende Haftung zwischen den einzelnen Schichten herzustellen, kann der Zusatz von Haftvermittlern zweckmäßig sein. Das sind beispielsweise Polyolefine mit funktionellen Gruppen (wie Carboxyl- oder Carboxylat-Gruppen). Es handelt sich dabei um modifizierte Homo- oder Copolymere des Ethylens und/oder Propylens und ggf. weiteren linearen α-Olefinen mit 3 bis 8 C-Atomen, die Monomere der α,β-ungesättigten Dicarbonsäuren, wie Malein-, Fumar- oder Itaconsäure oder deren Säureanhydride, -ester, -amide oder -imide aufgeproft enthalten. Geeignet sind auch Copolymerisate von Ethylen oder Propylen und ggf. weiteren linearen α-Olefinen mit 3 bis 8 C-Atomen mit α,β-ungesättigten Dicarbonsäuren, wie Acrylsäure, Methacrylsäure und/oder deren Metallsalze und/oder deren Alkylestem oder entsprechende Pfropfpolymere der genannten Monomere auf Polyolefine oder partiell verseifte EthylenNinylacetat-Copolymerisate, die ggf. mit einem Monomer der oben genannten Säuren pfropfpolymerisiert sind und einen niedrigen Verseifungsgrad aufweisen oder deren Mischungen. Die Haftvermittler können Bestandteil der weiteren Schichten sein oder separate Schichten bilden.

Anders als die einschichtigen Hüllen sind die mehrschichtigen Hüllen in der Regel nicht räucherbar.

Wegen der einfacheren Herstellung sind mehrschichtige Hüllen mit einem symmetrischen Aufbau bevorzugt. Schematisch läßt sich der Aufbau besonders geeigneter Hüllen wie folgt darstellen:

Polyamid/(Polyolefin + Haftvermittler)/Polyamid

Polyamid/Haftvermittler/Polyolefin/Haftvermittler/Polyamid

Herstellen lassen sich die erfindungsgemäßen gebogenen Hüllen aus entsprechenden nicht verstreckten, geraden Hüllen, die ihrerseits durch Extrusion oder Coextrusion nach allgemein bekannten Verfahren erhältlich sind.

Während die bekannten Kranzdärme aus verstrecktem ("orientiertem") Polyamid durch flächenmäßig begrenztes Auslösen des Thermoschrumpfs hergestellt werden, erfolgt die Herstellung des erfindungsgemäßen Kranzdarms durch partielles Erhitzen des aufgeblasenen Folienschlauchs und thermoplastisches Verformen der erhitzten Bereiche. Das Erhitzen kann dabei berührungsfrei (z.B. durch Einwirkung von Wärmestrahlung), durch Kontakt mit beheizten Rollen oder anderen wärmeübertragenden Elementen erfolgen. Beim thermoplastischen Verformen wird die UPA-Hülle praktisch nicht verstreckt. Das bedeutet, daß die erfindungsgemäße Hülle nach 15 min. Erwärmen in einem 80 °C Wasserbad einen Schrumpf von weniger als 4 % in Längs- und Querrichtung zeigt, bevorzugt sogar von weniger als 2 %. Je nach Art des Hüllenmaterials erfolgt das Verkranzen des UPA-Darms bei einer Temperatur von etwa 60 bis 200 °C, bevorzugt von 80 bis 160 °C.

Eine geeignete Vorrichtung zum Verkranzen ist beispielsweise in der EP-A 846 547 offenbart. Anstatt die Heißluft jedoch von innen radial nach außen zu führen, sollte die Heißluft bei der Herstellung des erfindungsgemäßen Kranzdarms von außen geführt werden. Auf diese Weise wird der äußere Umfang der Hülle auf eine höhere Temperatur (d.h. eine Temperatur oberhalb der Glastemperatur des Hüllenmaterials) gebracht als der innere. In den Bereichen mit der höheren Temperatur wird dann die Hülle thermoplastisch verformt und bildet einen Kranzdarm von beinahe natürlichem Aussehen.

Der erfindungsgemäße Kranzdarm kann in der üblichen Weise konfektioniert werden, insbesondere durch Aufstocken (= Raffen) zu sogenannten Raffraupen oder durch Herstellen von einseitig verschlossenen Abschnitten.

Verwenden läßt sich die erfindungsgemäße gebogene Schlauchfolie insbesondere für Kochwürste, Brühwürste (insbesondere Fleischwurst) und Rohwürste. Für Fleischwurst wird insbesondere eine räucherbare, einschichtige Hülle verwendet.

Das nachfolgende Beispiel dient zur Erläuterung der Erfindung.

Beispiel:

Eine unverstreckte, einschichtige Hülle aus Polyamid 6,6 mit einem Durchmesser von 45 mm (= Kaliber 45) und einer Wandstärke von 35 $\mu$m wurde verkranzt (Kranzinnendurchmesser Klassifizierung Typ B, 160 mm). Jeweils 50 m des Kranzdarms wurden dann zu einer Raupe gerafft.

Die Raupe wurde dann auf einer automatisch arbeitenden Füll-, Portionier- und Clipanlage mit Fleischwurstbrät gefüllt, dann geräuchert und schließlich 60 min. lang bei 78 °C in einem Brühschrank gebrüht. Die gebrühten Würste wurden dann mit kaltem Wasser abgeduscht und auf diese Weise abgekühlt. Durch den Brühvorgang hatten die Würste praktisch keinen Gewichtsverlust erlitten. Die abgekühlten Fleischwürste wurden dann vakuum-zweitverpackt.

Nach einwöchiger Lagerung im Kühlhaus hatte sich noch keine Flüssigkeit zwischen Wursthülle und Zweitverpackung angesammelt, d.h. es war kein "Ausdippen" erkennbar. Nach dem Entfernen der Zweitverpackung wurde die Wurst im Wasserbad auf 60 °C erwärmt und dann angeschnitten. Beim Anschneiden platzte die Wurst nicht auf. Sie ließ sich zudem durch Abringeln leicht vom Fleischwurstbrät entfernen. Die Brätoberfläche wies eine gleichmäßige und deutliche Rauchfarbe auf. Das Räucheraroma des Bräts war typisch.

**Patentansprüche**

1.   Bogenförmig gekrümmter, ein- oder mehrschichtiger Kunstdarm auf Polyamidbasis, **dadurch gekennzeichnet, daß** er unverstreckt ist und nach 15 Minuten Erwärmen in einem 80 °C Wasserbad einen Schrumpf von weniger als 4 % in Längs- und Querrichtung zeigt.

2.   Kunstdarm gemäß Anspruch 1, **dadurch gekennzeichnet, daß** der Schrumpf bevorzugt weniger als 2 % in Längs- und Querrichtung beträgt.

3.   Kunstdarm gemäß Anspruch 1 oder 2, **dadurch gekennzeichnet, daß** er nahtlos ist.

4.   Kunstdarm gemäß einem oder mehreren der Ansprüche 1 bis 3, **dadurch gekennzeichnet, daß** er zu mehr als 50 Gew.-% aus mindestens einem Polyamid und/oder Copolyamid besteht.

5. Kunstdarm gemäß einem oder mehreren der Ansprüche 1 bis 4, **dadurch gekennzeichnet, daß** das Polyamid oder Copolyamid ein aliphatisches Polyamid oder Copolyamid ist, bevorzugt Polycaprolactam (PA 6), Polyhexamethylenadipamid (PA 66), PA 6/66 oder PA 6,12.

6. Kunstdarm gemäß einem oder mehreren der Ansprüche 1 bis 4, **dadurch gekennzeichnet, daß** das Polyamid oder Copolyamid ein teilaromatisches Polyamid oder Copolyamid ist, bevorzugt ein Copolyamid mit Einheiten aus Hexamethylendiamin, Isophthalsäure und Terephthalsäure (PA 6I/6T).

7. Kunstdarm gemäß einem oder mehreren der Ansprüche 1 bis 4, **dadurch gekennzeichnet, daß** er eine Mischung von aliphatischen und teilaromatischen Polyamiden bzw. Copolyamiden enthält und der Anteil des teilaromatischen Polyamids bevorzugt bis zu 40 Gew.-%, besonders bevorzugt bis zu 30 Gew.-% beträgt, jeweils bezogen auf das Gesamtgewicht aller Polyamide und/oder Copolyamide.

8. Kunstdarm gemäß einem oder mehreren der Ansprüche 1 bis 7, **dadurch gekennzeichnet, daß** die Polyamid und/oder Copolyamid enthaltende Schicht andere Polymere enthält, bevorzugt Polyolefine und/oder Polyester.

9. Kunstdarm gemäß Anspruch 8, **dadurch gekennzeichnet, daß** der Anteil der anderen Polymere bis zu 50 Gew.-%, bevorzugt bis zu 35 Gew.-%, besonders bevorzugt bis zu 30 Gew.-%, bezogen jeweils auf das Gesamtgewicht der Schicht.

10. Kunstdarm gemäß einem oder mehreren der Ansprüche 1 bis 9, **dadurch gekennzeichnet, daß** er 2 bis 6 Schichten umfaßt.

11. Kunstdarm gemäß einem oder mehreren der Ansprüche 1 bis 10, **dadurch gekennzeichnet, daß** neben mindestens einer Schicht auf der Basis von Polyamid und/oder Copolyamid mindestens eine Schicht aus bzw. mit Polyolefin, Polyvinylalkohol (PVOH), Polyvinylacetat (PVA), Polyvinylidenchlorid (PVDC) oder Polyvinylchlorid (PVC) vorhanden ist.

12. Kunstdarm gemäß Anspruch 10 oder 11, **dadurch gekennzeichnet, daß** er eine symmetrische Schichtabfolge aufweist.

13. Kunstdarm gemäß einem oder mehreren der Ansprüche 1 bis 11, **dadurch gekennzeichnet, daß** er konfektioniert ist zu Raffraupen oder einseitig verschlossenen Abschnitten.

14. Verfahren zur Herstellung des Kunstdarms gemäß einem oder mehren der Ansprüche 1 bis 12, **dadurch gekennzeichnet, daß** ein gerader, unverstreckter Folienschlauch im aufgeblasenen Zustand partiell erhitzt und durch thermoplastisches Verformen in eine gekrümmte Form gebracht wird.

15. Verfahren gemäß Anspruch 13, **dadurch gekennzeichnet, daß** das partielle Erhitzen des Folienschlauchs berührungsfrei erfolgt.

16. Verwendung des Kunstdarms gemäß einem oder mehreren der Ansprüche 1 bis 12 bei der Herstellung von Kochwürsten, Brühwürsten oder Rohwürsten.

**Claims**

1. An arch-shaped curved, single layer or multilayer artificial polyamide-based sausage skin which is unstretched and, after heating for 15 minutes in an 80 °C water bath, exhibits a shrinkage of less than 4 % in the longitudinal and transverse directions.

2. The artificial sausage skin as claimed in claim 1, wherein the shrinkage is preferably less than 2 % in the longitudinal and transverse directions.

3. The artificial sausage skin as claimed in claim 1 or 2, wherein it is seamless.

4. The artificial sausage skin as claimed in one or more of claims 1 to 3, wherein it comprises more than 50% by weight of at least one polyamide and/or copolyamide.

5. The artificial sausage skin as claimed in one or more of claims 1 to 4, wherein the polyamide or copolyamide is an aliphatic polyamide or copolyamide, preferably polycaprolactam (nylon 6), polyhexamethylene adipamide (nylon 66), nylon 6/66 or nylon 6,12.

6. The artificial sausage skin as claimed in one or more of claims 1 to 4, wherein the polyamide or copolyamide is a partially aromatic polyamide or copolyamide, preferably a copolyamide having units of hexamethylenediamine, isophthalic acid and terephthalic acid (nylon 6I/6T).

7. The artificial sausage skin as claimed in one or more of claims 1 to 4, wherein it contains a mixture of aliphatic and partially aromatic polyamides or copolyamides and the fraction of the partially aromatic polyamide is preferably up to 40 % by weight, particularly preferably up to 30 % by weight, in each case based on the total weight of all polyamides and/or copolyamides.

8. The artificial sausage skin as claimed in one or more of claims 1 to 7, wherein the polyamide- and/or copolyamide-containing layer contains other polymers, preferably polyolefins and/or polyesters.

9. The artificial sausage skin as claimed in claim 8, wherein the fraction of the other polymers is up to 50 % by weight, preferably up to 35 % by weight, particularly preferably up to 30 % by weight, in each case based on the total weight of the layer.

10. The artificial sausage skin as claimed in one or more of claims 1 to 9, wherein it comprises 2 to 6 layers.

11. The artificial sausage skin as claimed in one or more of claims 1 to 10, wherein, in addition to at least one layer based on polyamide and/or copolyamide, at least one layer made of or including polyolefin, polyvinyl alcohol (PVOH), polyvinyl acetate (PVA), polyvinylidene chloride (PVDC) or polyvinyl chloride (PVC) is present.

12. The artificial sausage skin as claimed in claim 10 or 11, wherein it has a symmetrical layer sequence.

13. The artificial sausage skin as claimed in one or more of claims 1 to 11, wherein it is finally processed to give shirred sticks or sections closed at one end.

14. A process for producing the artificial sausage skin as claimed in one or more of claims 1 to 12, wherein a straight, unstretched film tube is partially heated in the inflated state and is brought into a curved shape by thermoforming.

15. The process as claimed in claim 13, wherein the partial heating of the film tube is performed in a contact-free manner.

16. The use of the artificial sausage skin as claimed in one or more of claims 1 to 12 in the production of cooked-meat sausages, scalded-emulsion sausages, or raw sausages.


**Revendications**

1. Tuyau flexible en matière synthétique, à base de polyamide, courbé en forme d'arc de cercle, en une ou plusieurs couches, **caractérisé en ce qu'**il n'est pas étiré et **en ce qu'**après 15 minutes d'échauffement dans un bain d'eau à 80°C, il présente un retrait de moins de 4 % dans le sens de sa longueur et dans le sens transversal.

2. Tuyau flexible en matière synthétique selon la revendication 1, **caractérisé en ce que** le retrait dans le sens de sa longueur et celui dans son sens transversal sont de préférence inférieurs à 2 %.

3. Tuyau flexible en matière synthétique selon la revendication 1 ou 2, **caractérisé en ce qu'**il ne présente pas de soudure.

4. Tuyau flexible en matière synthétique selon l'une ou plusieurs des revendications 1 à 3, **caractérisé en ce qu'**il est constitué pour plus de 50 % en poids d'au moins un polyamide et/ou d'un copolyamide.

**5.** Tuyau flexible en matière synthétique selon l'une ou plusieurs des revendications 1 à 4, **caractérisé en ce que** le polyamide ou le copolyamide sont un polyamide ou copolyamide aliphatiques, de préférence un polycaprolactame (PA 6), un poly(adipamide d'hexaméthylène) (PA66), un PA 6/66 ou PA 6,12.

**6.** Tuyau flexible en matière synthétique selon l'une ou plusieurs des revendications 1 à 4, **caractérisé en ce que** le polyamide ou copolyamide sont un polyamide ou copolyamide partiellement aromatique, de préférence un copolyamide qui présente des unités d'hexaméthylène-diamine, d'acide isophtalique ou d'acide téréphtalique (PA 6I/6T).

**7.** Tuyau flexible en matière synthétique selon l'une ou plusieurs des revendications 1 à 4, **caractérisé en ce qu'**il contient un mélange de polyamides ou copolyamides aliphatiques ou partiellement aromatiques, et **en ce que** la teneur du polyamide partiellement aromatique est de préférence d'au plus 40 % en poids et de façon particulièrement préférable de plus 30 % en poids, chaque fois par rapport au poids total de tous les polyamides et/ou copolyamides.

**8.** Tuyau flexible en matière synthétique selon l'une ou plusieurs des revendications 1 à 7, **caractérisé en ce** la couche qui contient le polyamide et/ou le copolyamide contient d'autres polymères, de préférence des polyoléfines et/ou des polyesters.

**9.** Tuyau flexible en matière synthétique selon la revendication 8, **caractérisé en ce que** la teneur des autres polymères est de jusque 50 % en poids, de préférence de jusque 35 % en poids et de façon particulièrement préférable de jusque 30 % en poids, chaque fois par rapport au poids total de la couche.

**10.** Tuyau flexible en matière synthétique selon l'une ou plusieurs des revendications 1 à 9, **caractérisé en ce qu'**il comporte de 2 à 6 couches.

**11.** Tuyau flexible en matière synthétique selon l'une ou plusieurs des revendications 1 à 10, **caractérisé en ce qu'**en plus d'au moins une couche à base de polyamide et/ou de copolyamide, il présente au moins une couche qui contient ou qui est constituée de polyoléfine, d'alcool polyvinylique (PVOH), de poly (acétate de vinyle) (PVA), de poly (chlorure de vinylidène) (PVDC) ou de poly-(chlorure de vinyle) (PVC).

**12.** Tuyau flexible en matière synthétique selon les revendications 10 ou 11, **caractérisé en ce qu'**il présente une succession symétrique de couches.

**13.** Tuyau flexible en matière synthétique selon l'une ou plusieurs des revendications 1 à 11, **caractérisé en ce qu'**il est confectionné en chenille plissée ou en tronçon fermé d'un côté.

**14.** Procédé de fabrication du tuyau flexible en matière synthétique selon l'une ou plusieurs des revendications 1 à 12, **caractérisé en ce qu'**on chauffe partiellement un film à manchon flexible rectiligne et non étiré à l'état soufflé et qu'on amène sous une forme courbée par déformation purement plastique.

**15.** Procédé selon la revendication 13, **caractérisé en ce que** le chauffage partiel du film en manchon s'effectue sans contact.

**16.** Utilisation du manchon flexible en matière synthétique selon l'une ou plusieurs des revendications 1 à 12 pour la fabrication de saucisses à cuire, de saucisses à bouillir ou de saucisses brutes.